# EUROPEAN PATENT APPLICATION

(11) **EP 4 512 606 A1**
(43) Date of publication of application: **26.02.2025**
(21) Application number: 24193758.0
(22) Date of filing: 09.08.2024
(51) Int. Cl.: B29D 30/06

(54) **SHAPING DEVICE FOR A TIRE BEAD**

(30) Priority: 22.08.2023 IT 202300017463
(71) Applicant: Bridgestone Europe NV/SA, 1930 Zaventem (BE)
(72) Inventor: CIARNELLA, Alessio, 00128 Roma (IT)
(74) Representative: Marchetti, Alessio

(57) **Abstract**

Shaping 1 device (4) for a bead (2) of a tire (3) and having: an annular body (6) having a notch (8) that confers a radially deformable open shape, an outer surface (9) configured to rest against the bead (2) and an inner surface (10) that is opposite the outer surface (9) and that has a conical shape; and a thrust disc (11) that is configured to be inserted into the annular body (6) and that has an outer surface (12) having a conical shape with the same inclination as the inner surface (10) of the annular body (6) such that the thrust disc (11), sliding axially with respect to the annular body (6), pushes the annular body (6) to widen.

## Description

### TECHNICAL SECTOR

The present invention relates to a shaping device for a bead of a tire.

### PRIOR ART

A vulcanized tire may be subjected to some post-production mechanical processes such as, for example, to improve balancing, the removal (typically by means of a grinding wheel) of a thin layer of rubber (for example having a thickness of a few tenths of a millimeter) at the bead...and over a limited and well-defined circumferential length (in this case around the *"high"* point of maximum imbalance and preferably along an arc not greater than 180°).

In order to ensure a good final result, these post-production machining operations that are performed on a vulcanized tire may require the bead to have excellent circularity (i.e., that it deviates from a perfect circle with particularly low tolerance) and excellent dimensional tolerance, especially in relation to the diameter of the bead (i.e., that the difference between the actual diameter and the theoretical diameter is reduced). However, it is not uncommon for the beads of a vulcanized tire to have relatively high circularity tolerances and dimensional tolerances due to the sum of the process tolerances and the tolerances for the materials, and therefore for the bead to deviate from perfect circularity by a dimension also greater than the dimension of the material to be removed by means of a post-production machining operation; obviously, in this situation the final result of the post-production machining operation will inevitably be poor if the tire is left free to move (i.e., not coupled to any support that temporarily reduces the tolerances) insofar as a tire that is left free to move is not adequately controllable along the bead perimeter (namely, within some areas of the bead too much material will be removed while within other areas of the bead not enough material will be removed).

### DESCRIPTION OF THE INVENTION

The object of the present invention is to provide a shaping device for a bead of a tire that adapts to the dimensional variations in the diameter of the bead with respect to the theoretical dimension thereby making it possible to ensure excellent circularity of the bead during a post-production machining operation, and that, at the same time, is quick and easy to use (i.e., quick and easy to assemble and disassemble).

According to the present invention, a shaping device for a bead of a tire is provided, as set forth in the accompanying claims.

The claims describe preferred embodiments of the present invention that form an integral part of the present description.

### BRIEF DESCRIPTION OF THE DRAWINGS

The present invention will now be described with reference to the attached drawings, which illustrate an exemplary, non-limiting embodiment, wherein:
- Fig. 1 is a perspective view of a tire machining station provided with a shaping device that is obtained according to the present invention and that is coupled to a tire;
- Fig. 2 is a perspective view of the shaping device of Fig. 1 that is not coupled to a tire;
- Fig. 3 is a side view of part of the shaping device of Fig. 1; and
- Fig. 4 and 5 are two different sectional views of part of the shaping device of Fig. 1.

### PREFERRED EMBODIMENTS OF THE INVENTION

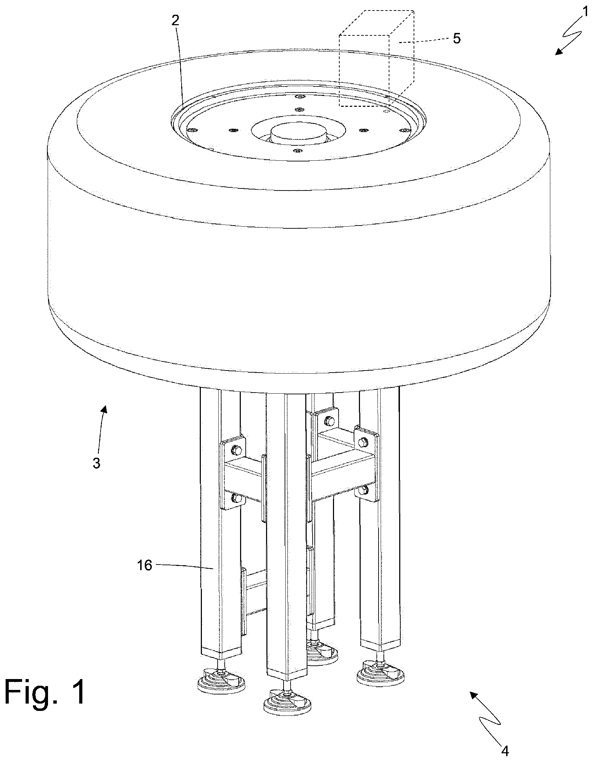

In Fig. 1 the reference numeral 1 indicates in its entirety a machining station configured for performing post-production machining on a bead 2 of a vulcanized tire 3.

The machining station 1 comprises a shaping device 4 that is configured to engage a bead 2 of a tire 3 and a tool 5 that is configured to perform a machining operation on the tire 3 and that is in particular configured to remove material at a bead 2 of the tire 3.

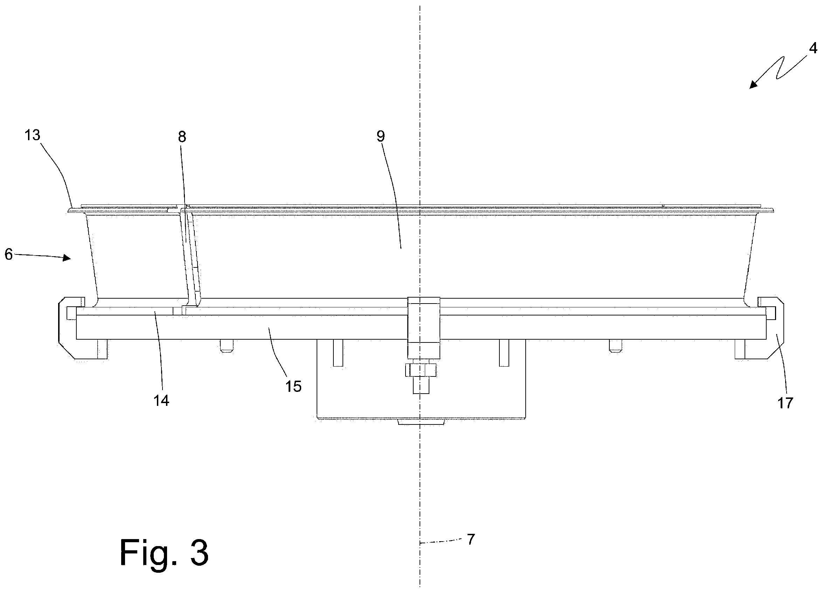

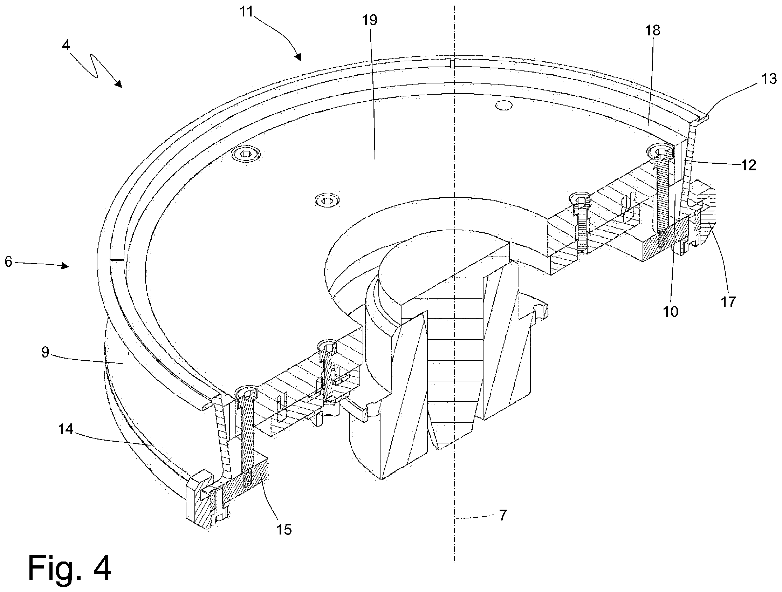

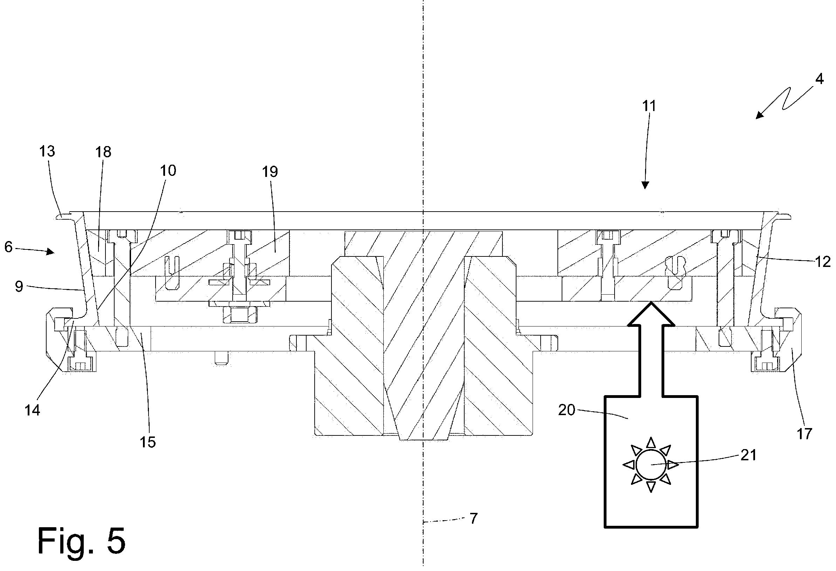

As better shown in Fig. 3, 4 and 5, the shaping device 4 comprises an annular body 6 that extends around a longitudinal axis 7 (oriented vertically). The annular body 6 has a notch 8 that confers a radially deformable open shape to the annular body 6; namely, by virtue of the fact that the annular body 6 has two opposite ends facing each other and not connected (insofar as they are separated by the notch 8), it may deform radially thereby increasing or decreasing the diameter thereof (thus moving the two opposite ends separated by the notch 8 away from or towards one another). The annular body 6 has an outer surface 9 configured to rest (from the inside) against the bead 2 and an inner surface 10 (visible in Fig. 4 and 5) that is opposite the outer surface 9 and that has a conical shape.

According to a preferred embodiment shown in the accompanying figures, the outer surface 9 of the annular body 6 has a conical shape. The outer surface 9 of the annular body 6 preferably has a conical shape that is analogous to the conical shape of the inner surface 10 of the annular body 6; namely, the outer surface 9 of the annular body 6 is parallel to the inner surface 10 of the annular body 6 and therefore has the same inclination as the inner surface 10 of the annular body 6. According to a different embodiment, not shown, the outer surface 9 of the annular body 6 has a cylindrical shape, but in this case radial deformation would not be possible.

As better shown in Fig. 4 and 5, the shaping device 4 comprises a thrust disc 11 that is configured to be inserted into the annular body 6 and that has a conical-shaped outer surface 12 having the same inclination as the inner surface 10 of the annular body 6, such that the thrust disc 11, sliding axially (i.e., parallel to the longitudinal axis 7) with respect to the annular body 6, pushes the annular body 6 to widen; i.e., in use the conical outer surface 12 of the thrust disc 11 rests upon the inner surface 10 of the annular body 6, and therefore, by axially sliding the thrust disc 11 with respect to the annular body 6, it is possible to widen or narrow the annular body 6.

The thrust disc 11 is arranged, in use, within the annular body 6 in such a way as to rest the outer surface 12 of the thrust disc 11 against the inner surface 10 of the annular body 6: starting from this position, axially pushing the thrust disc 11 inside the annular body 6, results in an enlargement of the annular body 6, whereas axially extracting the thrust disc 11 from the annular body 6 allows the annular body 6 to tighten by elastic recoil (i.e., when the deforming shape that pushed the annular body 6 to widen is missing, the annular body 6 returns to the original size thereof by elastic recoil).

According to a preferred embodiment shown in the accompanying figures, the annular body 6 comprises two circular edges 13 and 14, which are arranged at the two axially opposite ends of the annular body 6 and that protrude cantilevered from the outer surface 9 of the annular body 6.

According to a preferred embodiment shown in the accompanying figures, the shaping device 4 comprises a support plate 15 with a circular shape (in particular an annular shape, i.e., with a central hole) that is supported by four legs 16 that rest upon the ground and that support the annular body 6; in particular, the annular body 6 rests upon an upper surface of the support plate 15 in order to be able to slide horizontally (therefore perpendicularly to the longitudinal axis 7, which is oriented vertically) with respect to the support plate 15.

The support plate 15 has containment elements 17 that are configured to limit the displacement of the annular body 6 with respect to the support plate 15, thus defining a position of maximum displacement of the annular body 6 with respect to the support plate 15. The main function of the containment elements 17 is to limit the axial displacement of the annular body 6 with respect to the support plate 15 in such a way as to prevent the annular body 6 from being drawn upwards (i.e., raised with respect to the support plate 15) when the thrust disc 11 is raised axially.

In particular, four containment elements 17 are provided symmetrically arranged around the longitudinal axis 7 (more generally, at least three containment elements 17 are arranged symmetrically around the longitudinal axis 7). Each containment element 17 has a C shape within which the outer circular edge 14 of the annular body 6 is arranged with a certain amount of play; the play (space) between the outer circular edge 14 of the annular body 6 and the wall of the cavity of each C-shaped containment element 17 defines the freedom of movement (sliding) of the annular body 6 with respect to the support plate 15 (whereto the containment elements 17 are attached).

According to a preferred embodiment, the annular body 6 is made of an aluminum alloy, which is a more flexible material than steel and may therefore be deformed (elastically) with relatively little effort; in particular, with the same deformation with respect to an annular steel body 6, the annular aluminum alloy body 6 demonstrates lower levels of internal stress. According to a preferred embodiment, shown in Fig. 4 and 5, the thrust disc 11 comprises an outer element 18, which is annular in shape and which is made of a first material, and an inner element 19, which is circular in shape and which is made of a second material that is harder than the first material. Preferably, the first material from which the thrust disc 11 is made is bronze, which has very low friction with other metals and therefore ensures very low friction when sliding against the annular body 6; preferably, the second material from which the inner element 19 is made is steel.

According to a preferred embodiment, the axial notch 8 of the annular body 6 has, at rest (i.e., in the absence of external stresses such as those generated by the thrust disc 11), a circumferential extension of about 3° and therefore about 0.8% of a circumferential extension of the annular body 6; more generally, the axial notch 8 of the annular body 6 has, at rest, a circumferential extension of between 0.5% and 1.5% of a circumferential extension of the annular body 6. In this way, the empty space present at the axial notch 8 of the annular body 6 has a limited circumferential extension and therefore does not cause excessive deformation with respect to the circularity of the bead 2 of the tire 1; in fact, the annular body 6 pressing against the bead 2 of the tire 1 forces the bead 2 to assume a (substantially) perfectly circular shape everywhere except at the axial notch 8 in which, there being an empty space, it is not able to force the bead 2 to assume a (substantially) perfectly circular shape.

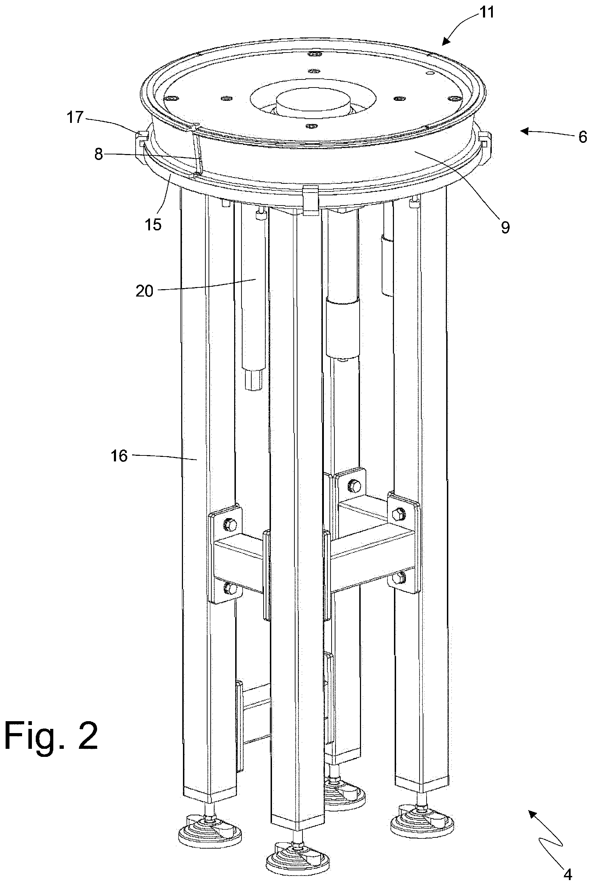

The shaping device 4 comprises an actuator 20 (partially shown in Fig. 2 and schematically shown in Fig. 4) configured to apply a calibrated axial thrust (i.e., of a predefined and constant intensity) between the annular body 6 and the thrust disc 11, in such a way as to cause the thrust disc 11 to slide axially (i.e., along the longitudinal axis 7) with respect to the annular body 6 and therefore in such a way as to widen or narrow the annular body 6.

According to one possible embodiment, the actuator 20 comprises a sensor 21 (which may be physical or virtual) that is configured to measure the axial thrust exerted between the annular body 6 and the thrust disc 11 in such a way as to ensure that the axial thrust is equal to a predetermined and desired value. According to a different embodiment, the calibrated axial thrust, between the annular body 6 and the thrust disc 11, is manually applied by an operator.

According to a further embodiment, the sensor 21 (which may be physical or virtual) is configured to measure an axial displacement of the thrust disc 11 with respect to the annular body 6 to which, by virtue of the known and calibrated conical geometry, a radial deformation of the annular body 6 corresponds uniquely.

In use, the thrust disc 11 is arranged in a raised (extracted) position with respect to the annular body 6 in order to allow the annular body 6 to assume (by elastic recoil) a minimum dimension (radial and therefore circumferential) which may or may not be less than the dimension (radial and therefore circumferential) of a bead 2 of a tire 1; in this configuration, the bead 2 may be easily arranged (fitted) around the annular body 6.

Once the bead 2 has been inserted (fitted) around the annular body 6, a calibrated axial displacement (i.e., a calibrated axial thrust) is applied between the annular body 6 and the thrust disc 11 in order to widen the annular body 6 (i.e., increase the radial and therefore circumferential dimension of the annular body 6 by enlarging the notch 8) and therefore cause the annular body 6 to push against the bead 2 thereby forcing the bead 2 to deform (slightly and elastically) so as to adhere to the outer surface 9 of the annular body 6 and thereby assume the (substantially) perfectly circular shape of the annular body 6.

Under these conditions, the tool 5 may perform the machining operation on the bead 2 which has assumed a (substantially) perfectly circular shape and may therefore be machined with great precision.

At the end of the machining operation, the thrust disc 11 is once again arranged in the raised (extracted) position with respect to the annular body 6 so as to allow the annular body 6 to assume (by elastic recoil) the minimum dimension (radial and therefore circumferential); in this configuration, the bead 2 may be easily separated (extracted) from the annular body 6.

It is important to note that the axial thrust that is exerted between the annular body 6 and the thrust disc 11 must be calibrated in order to prevent it from being excessive (thus causing damage to the bead 2 or to other components of the tire 1 that are deformed in a plastic manner instead of in an elastic manner) and also to prevent it from being insufficient (i.e., not strong enough to cause the desired elastic deformation of the bead towards a perfectly circular shape).

In general, for each size of the nominal bead 2 (15 inches, 16 inches, 17 inches, etc.), a dedicated set (namely of an appropriate size) is required composed of an annular body 6, a thrust disc 11 and a plate 15, which are easily interchangeable.

The embodiments described herein may be combined without departing from the scope of protection of the present invention.

The shaping device 4 described above has many advantages.

Firstly, the shaping device 4 described above makes it possible to ensure excellent circularity of the bead 2 of a tire 1 during a post-production machining operation on the bead 2 and therefore makes it possible to ensure excellent machining precision.

In particular, the shaping device 4 described above is capable of adapting to all possible deformations that may occur within the bead 2 of a tire 3 of a given size thereby succeeding in restoring the bead 2 to a (substantially) perfectly circular shape in order to perform a post-production machining operation.

The shaping device 4 described above is furthermore quick and easy to use (i.e., quick and easy to assemble and disassemble).

Finally, the shaping device 4 described above is simple and inexpensive to manufacture.

### LIST OF REFERENCE NUMBERS IN THE FIGURES

- 1: machining station
- 2: bead
- 3: tire
- 4: shaping device
- 5: tool
- 6: annular body
- 7: longitudinal axis
- 8: notch
- 9: outer surface
- 10: inner surface
- 11: thrust disc
- 12: outer surface
- 13: circular edge
- 14: circular edge
- 15: support plate
- 16: legs
- 17: containment elements
- 18: outer element
- 19: inner element
- 20: actuator
- 21: sensor

## Claims

1. Shaping device (4) for a bead (2) of a tire (3) and comprising:
an annular body (6) having a notch (8) that confers a radially deformable open shape, an outer surface (9) configured to rest against the bead (2), and an inner surface (10) that is opposite the outer surface (9) and that has a conical shape; and
a thrust disc (11) that is configured to be inserted into the annular body (6) and that has a conical-shaped outer surface (12) having the same inclination as the inner surface (10) of the annular body (6) in such a way that the thrust disc (11), sliding axially with respect to the annular body (6), pushes the annular body (6) to widen.

2. Shaping device (4) according to claim 1, wherein the outer surface (9) of the annular body (6) has a conical shape.

3. Shaping device (4) according to claim 1, wherein the outer surface (9) of the annular body (6) has a conical shape analogous to the conical shape of the inner surface of the annular body (6).

4. Shaping device (4) according to claims 1, 2 or 3, wherein the annular body (6) comprises two circular edges (13, 14) that are arranged at the two axially opposite ends of the annular body (6) and protrude cantilevered from the outer surface (9) of the annular body (6).

5. Shaping device (4) according to one of claims 1 to 4 and comprising a circular-shaped support plate (15) whereupon the annular body (6) rests in order to allow the annular body (6) to slide with respect to the support plate (15).

6. Shaping device (4) according to claim 5, wherein the support plate (15) has containment elements (17) that are configured to limit the displacement of the annular body (6) with respect to the support plate (15) thereby defining a position of maximum displacement of the annular body (6) with respect to the support plate (15).

7. Shaping device (4) according to claim 6, wherein each containment element (17) has a C shape within which an outer edge (14) of the annular body (6) is arranged.

8. Shaping device (4) according to one of claims 1 to 7, wherein the annular body (6) is made of an aluminum alloy.

9. Shaping device (4) according to one of claims 1 to 8, wherein the thrust disc (11) comprises an outer element (18), which is annular in shape and is made of a first material, and an inner element (19), which is circular in shape and that is made of a second material that is harder than the first material.

10. Shaping device (4) according to claim 9, wherein the first material is bronze and the second material is steel.

11. Shaping device (4) according to one of claims 1 to 10, wherein the axial notch (8) of the annular body (6) exhibits, at rest, a circumferential extension of between 0.5% and 1.5% of a circumferential extension of the annular body (6).

12. Shaping device (4) according to one of claims 1 to 11 and comprising an actuator (20) configured to apply a calibrated axial thrust between the annular body (6) and the thrust disc (11).

13. Station (1) for machining a tire (3) and comprising:
the shaping device (4) according to one of claims 1 to 12; and
a tool (5) that is configured to perform a machining operation on the tire (3) and in particular to remove material at a bead (2) of the tire (3).

14. Method for machining a tire (3) and comprising the steps of:
applying to the tire (3) the shaping device (4) according to one of claims 1 to 12; and
performing a machining operation on the tire (3) on the tire (3) in the vicinity of the shaping device (4) and in particular removing material at a bead (2) of the tire (3).
